# EUROPÄISCHE PATENTSCHRIFT

(11) **EP 3 234 320 B1**
(45) Veröffentlichungstag und Bekanntmachung des Hinweises auf die Patenterteilung: **21.11.2018**
(21) Anmeldenummer: 15808366.7
(22) Anmeldetag: 30.11.2015
(51) Int. Cl.: F02B 75/04, F16K 31/122, F02D 15/02, F15B 13/07, F16C 7/06

(54) **HYDRAULIKVENTIL ZUM SCHALTEN EINES STELLKOLBENS EINES PLEUELS**
HYDRAULIC VALVE FOR SWITCHING A CONTROL PISTON OF A CONNECTING ROD
SOUPAPE HYDRAULIQUE PERMETTANT DE COMMUTER UN PISTON DE COMMANDE D'UNE BIELLE

(30) Priorität: 19.12.2014 DE 102014119157; 19.01.2015 DE 102015100662
(43) Veröffentlichungstag der Anmeldung: 25.10.2017
(73) Patentinhaber: Hilite Germany GmbH, 97828 Marktheidenfeld (DE)
(72) Erfinder: SCHULZE, Dietmar, 35394 Gießen (DE); MUDRA, Alexander, 02826 Görlitz (DE)
(86) Internationale Anmeldenummer: PCT/EP2015/078013
(87) Internationale Veröffentlichungsnummer: WO 2016/096381

(56) Entgegenhaltungen:
- DE-A1-102010 061 360
- DE-A1-102010 061 362
- DE-A1-102013 103 685
- DE-A1-102013 105 389

## Beschreibung

### Technisches Gebiet

Die Erfindung betrifft ein Hydraulikventil mit einem Hydraulikfluid, insbesondere zum Schalten eines Stellkolbens in einem Pleuel für eine variable Verdichtung einer Brennkraftmaschine eines Kraftfahrzeugs sowie ein Pleuel mit einem solchen Hydraulikventil.

### Stand der Technik

Bei Brennkraftmaschinen wirkt sich'ein hohes Verdichtungsverhältnis positiv auf den Wirkungsgrad des Verbrennungsmotors aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuellänge bekannt.

Aus der DE 10 2010 016 037 A1 ist ein Umschaltventil, insbesondere zum Steuern eines Hydraulikflüssigkeitsstroms, mit einer Kugelschreibermechanik bekannt, welches durch Aufbringen eines Betätigungsimpulses auf ein Betätigungsmittel der Kugelschreibermechanik wechselweise in einer ersten oder in einer zweiten Raststellung einrastbar ist. Die Kugelschreibermechanik ist so mit dem Hydraulikventil gekoppelt, dass die erste oder die zweite Raststellung einer jeweiligen ersten oder zweiten Schaltstellung eines Steuerkolbens des Hydraulikventils entspricht.

Aus der DE 10 2010 061 362 A1 sowie der DE 10 2013 103 685 A1 sind ebenfalls jeweils Umschaltventile zum Steuern eines Hydraulikflüssigkeitsstroms mit einer Kugelschreibermechanik bekannt.

Die gattungsgemäße DE 10 2013 105 389 A1 beschreibt ein Umschaltventil, welches mit einem Schaltmechanismus versehen ist. Der Schaltmechanismus schaltet das Hydraulikventil durch Aufbringen eines Betätigungsimpulses wechselweise von einer ersten in eine zweite Schaltstellung und umgekehrt. Hierzu wird in einem Druckraum des Hydraulikventils ein Betätigungsimpuls aufgebracht, welcher auf eine Stirnseite des Steuerkolbens wirkt und den Steuerkolben des Hydraulikventils gegen die Federkraft einer Feder ermöglicht. Der Schaltmechanismus weist einen feststehenden Rastierbolzen mit einer Schaltnut auf, in welche eine oder mehrere relativ zum Rastierbolzen verlagerbare Rastierkugeln eingreifen. Rücklaufsperren verhindern Fehlbewegungen der Rastierkugeln.

Das Hydraulikventil ist mit einer Kugelschreibermechanik versehen, die durch Aufbringen eines Betätigungsimpulses das Hydraulikventil wechselweise von einer ersten in eine zweite Schaltstellung und umgekehrt schaltet. Zum Schalten des Hydraulikventils von der ersten Schaltstellung in die zweite Schaltstellung durch Aufbringen des Betätigungsimpulses auf das Betätigungsmittel der Kugelschreibermechanik ist der Steuerkolben des Hydraulikventils in etwa entgegen einer Richtung des Betätigungsimpulses um einen vorbestimmten Weg verlagerbar. Dies ermöglicht ein Umschalten des Hydraulikventils von der ersten Schaltstellung in die zweite Schaltstellung. Zum Schalten des Hydraulikventils von der zweiten Schaltstellung in die erste Schaltstellung durch Aufbringen des Betätigungsimpulses auf das Betätigungsmittel der Kugelschreibermechanik ist der Steuerkolben des Hydraulikventils in etwa in der Richtung des Betätigungsimpulses um den vorbestimmten Weg verlagerbar. Dies ermöglicht ein Umschalten des Hydraulikventils von der zweiten Schaltstellung in die erste Schaltstellung.

### Offenbarung der Erfindung

Eine Aufgabe der Erfindung ist es, ein Hydraulikventil zum Steuern eines Hydraulikfluids zu schaffen, welches ein sicheres Schalten des Hydraulikventils bei gleichzeitig robuster Bauweise ermöglicht.

Eine weitere Aufgabe ist es, ein Pleuel mit einem solchen Hydraulikventil zu schaffen, ein sicheres Schalten des Hydraulikventils bei gleichzeitig robuster Bauweise ermöglicht.

Die vorgenannten Aufgaben werden nach einem Aspekt der Erfindung gelöst mit den Merkmalen der unabhängigen Ansprüche.

Günstige Ausgestaltungen und Vorteile der Erfindung ergeben sich aus den weiteren Ansprüchen, der Beschreibung und der Zeichnung.

Es wird ein Hydraulikventil mit einem Hydraulikfluid vorgeschlagen, insbesondere zum Schalten eines Stellkolbens in einem Pleuel für eine variable Verdichtung einer Brennkraftmaschine, das ein Ventilgehäuse umfasst, das einen ersten Arbeitsanschluss und einen zweiten Arbeitsanschluss sowie einen Versorgungsanschluss aufweist, der mit einem hydraulischen Druck des Hydraulikfluids beaufschlagbar ist, wodurch ein in dem Ventilgehäuse angeordneter beweglicher Kolben gegen die Kraft einer vorgespannten Feder verschiebbar ist. Dabei ist der Kolben wahlweise in einer ersten Schaltstellung und in einer zweiten Schaltstellung arretierbar. Eine in dem Ventilgehäuse angeordnete axiale Welle weist eine Schaltkulisse auf, wodurch der Kolben über ein in der Schaltkulisse geführtes Steuerelement von der ersten Schaltstellung in die zweite Schaltstellung und von der zweiten Schaltstellung in die erste Schaltstellung führbar ist.

Das Steuerelement ist erfindungsgemäß mittels eines elastisch gehaltenen Führungsstifts in der Schaltkulisse führbar und die Schaltkulisse weist wenigstens eine Führungsrampe mit einem Absatz auf, sodass das Steuerelement nur in einer vorgegebenen Richtung bewegbar ist, wobei das mit dem Kolben in Wirkverbindung angeordnete Steuerelement an der vorgespannten Feder abgestützt und gegen die Feder verschiebbar.
Es ist günstig, wenn der Führungsstift elastisch gehalten ist, da so leicht der Laufbahn der Schaltkulisse gefolgt werden kann. Auch können dadurch auf einfache Weise mittels Führungsrampen und Absätzen eine Änderung in der Höhe der Laufbahn realisiert werden. Hierdurch kann eine sichere Funktionsweise des Steuerelements des Hydraulikventils gewährleistet werden, da der Führungsstift damit unterschiedlichen Höhen leicht folgen kann. Vorteilhaft kann eine elastische Führung des Führungsstifts über eine elastische Feder, beispielsweise eine Blattfeder erreicht werden.

Dadurch, dass der Führungsstift des Steuerelements der Laufbahn der Schaltkulisse folgt und auf diese Laufbahn insbesondere durch eine Feder gepresst wird, ist sichergestellt, dass der Führungsstift auch einer Führungsrampe folgen kann, welche dann wiederum nach Erreichen einer vorgegebenen Höhe in einen Absatz münden kann. Der Führungsstift wird der Führungsrampe sowie dem Absatz folgen. Danach kann der Führungsstift nicht mehr rückwärts geführt werden, da der Absatz zu steil ist und nicht überwunden werden kann. So ist sichergestellt, dass das Steuerelement mit dem Führungsstift und damit auch der mit dem Steuerelement verbundene Kolben der Laufbahn der Schaltkulisse nur in einer Richtung folgen kann.

Dadurch dass das Steuerelement an der vorgespannten Feder abgestützt und gegen die Feder verschiebbar und das Steuerelement mit dem Kolben in Wirkverbindung angeordnet ist, ist der Kolben auf diese Weise ebenfalls an der Feder abgestützt, sodass insgesamt der Kolben, der mit dem Hydraulikdruck beaufschlagt ist, in einem Kräftegleichgewicht mit der Feder steht. So kann mit dem Hydraulikfluid, das einseitig auf den Kolben wirkt, die Position des Kolbens mit dem Hydraulikdruck eingestellt werden, indem der Kolben sich axial in einer Richtung verschiebt, je nachdem, ob Federkraft oder Hydraulikdruck überwiegen.

Gemäß der Erfindung wird durch ein Hydraulikventil, welches in einer Pleuelmechanik angeordnet ist, ein Hydraulikfluid gesteuert, welches über einen Stellkolben in der Pleuelmechanik das Verdichtungsverhältnis einer Brennkraftmaschine verändert. Es gibt zwei prinzipiell unterschiedliche Ventilkonzepte, welche die Funktion umsetzen können. Zum einen ein bistabiles Hydraulikventil, das durch unterschiedliche Druckniveaus des Hydraulikfluids schaltet. Bei einem weiteren Konzept wird das Hydraulikventil durch Druckpulse aktiviert. Bei dem Konzept der Druckpulsschaltung kann es vorkommen, dass, wenn ein Hydraulikventil bei der Beaufschlagung mit einem Druckpuls nicht schaltet, eine Asymmetrie der Ventilstellungen bei den Ventilen untereinander entsteht. Beim Konzept der Schaltung mit Druckniveaus können Probleme entstehen, wenn Druckschwankungen des Hydraulikfluids auftreten, da es zu einem ungewollten Schalten des Hydraulikventils führen kann. Weitere Probleme stellen eine starke Abhängigkeit des Schaltverhaltens von der Drehzahl der Brennkraftmaschine dar.

Diese Probleme können mit der vorgeschlagenen Lösung durch eine gegenseitige Ergänzung der Vorteile beider Konzepte mit einem Hydraulikventil umgangen werden, das mindestens zwei stabile Schaltzustände aufweist. In dem Ventilgehäuse ist ein Kolben angeordnet, der durch den anliegenden Hydraulikdruck des Hydraulikfluids eine Axialkraft erfährt. Dieser Axialkraft wirkt ein Steuerelement entgegen, welches sich an einer vorgespannten Feder abstützt. Die Position des Steuerelements ist über einen Führungsstift in einer Laufbahn einer Schaltkulisse fixiert. Der Kolben befindet sich in einer ersten Schaltstellung als Ausgangslage in einer verrasteten Position. Ein erster Arbeitsanschluss ist zum Versorgungsanschluss geöffnet und der zweite Arbeitsanschluss ist geschlossen. Der Hydraulikdruck ist auf einem Normalniveau. Erhöht sich der Hydraulikdruck auf einen vorgegebenen Wert, bewegt sich der Kolben mit dem Steuerelement entlang einer durch die Schaltkulisse vorgegebenen Laufbahn zu einem ersten Anschlag und verharrt in dieser Position, so lange der Hydraulikdruck gehalten wird. Sobald der Hydraulikdruck wieder fällt, kann der Führungsstift in einer zweiten Rastposition der Schaltkulisse einrasten, und der Kolben befindet sich in einem zweiten Schaltzustand. Sowohl am ersten Anschlag als auch in der zweiten Rastposition ist der zweite Arbeitsanschluss zum Versorgungsanschluss geöffnet und der erste Arbeitsanschluss geschlossen. Der Führungsstift des Steuerelements kann sich dabei immer nur in einer vorgegebenen Richtung entlang der Laufbahn der Schaltkulisse bewegen, da er durch Führungsrampen und Absätze geführt wird.

Wirkt nun ein erneuter Hydraulikdruckstoß, gelangt der Führungsstift zum zweiten Anschlag der Schaltkulisse. Erst wenn der Hydraulikdruck wieder abfällt, bewegt sich das Steuerelement am Führungsstift geführt wieder in die erste Rastposition und der erste Arbeitsanschluss wird wieder zum Versorgungsanschluss geöffnet.

Ein Vorteil des erfindungsgemäßen Hydraulikventils ist dabei, dass es ein Fail-Safe-Konzept umsetzt. Kommt es nämlich in einer Anordnung mit mehreren Hydraulikventilen zum Verschalten eines Hydraulikventils, können über eine Druckrampe alle Hydraulikventile in die erste Rastposition gebracht werden. Dabei wird der Hydraulikdruck bis auf einen vorgegebenen Wert erhöht und dann wieder erniedrigt. Dies führt dazu, dass alle beteiligten Hydraulikventile der Anordnung in der ersten Rastposition sind. Dieses Verhalten wird erreicht durch eine asymmetrische Gestaltung der Laufbahn der Schaltkulisse. Die beiden Anschläge werden deshalb axial um einen vorgegebenen Betrag versetzt, sodass zum Erreichen des ersten Anschlags ein um einen dadurch bestimmten Wert höherer Hydraulikdruck nötig ist, als zum Erreichen des zweiten Anschlags der Schaltkulisse.

Vorteile der Erfindung sind dabei ein einfacher Aufbau Hydraulikventils bei geringen Bauteilkosten. Weiter ergibt sich eine hohe Dauerhaltbarkeit des Hydraulikventils, da die Schaltbetätigung durch das Steuerelement mit Führungsstift in der Schaltkulisse gesteuert wird und nur diese Bauteile aus entsprechend belastbaren Werkstoffen ausgeführt sein müssen. Das Hydraulikventil selbst weist geringen Verschleiß oder Abnutzung durch große Auflageflächen des Kolbens auf.

Die Schaltvorrichtung ist leicht montierbar und weist einen sicheren Betrieb unter Rotation der Kurbelwelle auf. Die einzelnen benötigten Komponenten sind auf kostengünstige Weise herstellbar. Die Schaltvorrichtung weist keine Abhängigkeit von der Drehzahl der Brennkraftmaschine auf. Schaltzustände sind beliebig auswählbar. Ein Betrieb der Brennkraftmaschine mit Zylinderabschaltung ist möglich.

Gemäß einer vorteilhaften Ausgestaltung können die erste Schaltstellung und die zweite Schaltstellung jeweils als in einem Druckbereich stabile Lagen des Kolbens ausgebildet sein. So lässt sich das Hydraulikventil als bistabiles Umschaltventil in Form eines Kugelschreibers betätigen. Der Kolben bleibt dabei als Schaltelement in einer der beiden Schaltstellungen, unabhängig vom Hydraulikdruck und kann erst durch einen Druckpuls oder eine Druckrampe aus einer der beiden Schaltstellungen gelöst und in die jeweils andere überführt werden.

Gemäß einer vorteilhaften Ausgestaltung kann dabei in der ersten Schaltstellung der erste Arbeitsanschluss zu dem Versorgungsanschluss geöffnet sein und der zweite Arbeitsanschluss zu dem Versorgungsanschluss geschlossen sein und in der zweiten Schaltstellung der zweite Arbeitsanschluss zu dem Versorgungsanschluss geöffnet sein und der erste Arbeitsanschluss zu dem Versorgungsanschluss geschlossen sein. Auf diese Weise ist sichergestellt, dass jeweils nur ein Arbeitsanschluss geöffnet ist und kein Zwischenzustand des mit dem Hydraulikventil geschalteten Elements, beispielsweise dem Steuerkolben eines Pleuels für eine variable Verdichtung, sich einstellen kann.

Gemäß einer vorteilhaften Ausgestaltung kann der Kolben in der ersten Schaltstellung in einer ersten Rastposition der Schaltkulisse und in der zweiten Schaltstellung in einer zweiten Rastposition verrastbar sein. Durch ein Verrasten des Kolbens wird sichergestellt, dass Schwankungen im Hydraulikdruck sich nicht auf die Arbeitsposition des Kolbens und damit auf sein Schaltverhalten, beispielsweise eines Stellkolbens, auswirken. Dadurch wird eine sichere Betriebsfunktion des Hydraulikventils gewährleistet.

Gemäß einer vorteilhaften Ausgestaltung kann das Steuerelement von der ersten Rastposition über einen ersten Anschlag der Schaltkulisse zu der zweiten Rastposition und über eine zweiten Anschlag der Schaltkulisse zurück zu der ersten Rastposition führbar sein. Eine solche Ausgestaltung der Schaltkulisse mit Führungsrampen und Absätzen gewährleistet, dass das Steuerelement und damit der damit verbundene Kolben sich nur in einer vorgegebenen Laufrichtung der Schaltkulisse bewegen lassen. Damit wird ein ausfallsicherer Betrieb des Hydraulikventils erreicht, da so jederzeit über einen vorgegebenen Wert des Hydraulikdrucks eine Rückfallposition, beispielsweise die erste Rastposition erreicht werden kann.

Gemäß einer vorteilhaften Ausgestaltung kann der Kolben durch einen Druckanstieg des Hydraulikfluids aus einer der beiden Schaltstellungen lösbar sein. Durch einen Druckanstieg kann über eine Führungsrampe der Schaltkulisse ein nächster Anschlag in der Laufbahn der Schaltkulisse durch das Steuerelement erreicht werden, und damit bei weiterem Abfall des Hydraulikdrucks wieder eine nächste Schaltposition.

Gemäß einer vorteilhaften Ausgestaltung kann der Kolben über eine Druckrampe des Hydraulikfluids in die erste Schaltstellung rückführbar sein. Damit wird ein Fail-Safe-Verhalten des Hydraulikventils realisierbar, da auf diese Weise eine Anordnung von Hydraulikventilen auf sicherem Weg in eine Grundposition rückgeführt werden können. Dies wird ermöglicht, da das Steuerelement über einen Druckanstieg aus einer Rastposition gelöst werden kann und die Laufbahn der Schaltkulisse nur eine Bewegungsrichtung zulässt, wodurch auf jeden Fall die erste Schaltstellung wieder erreichbar ist.

Die Erfindung betrifft nach einem weiteren Aspekt ein Pleuel mit einem Hydraulikventil mit einem Hydraulikfluid, insbesondere zum Schalten eines Stellkolbens in dem Pleuel für eine variable Verdichtung einer Brennkraftmaschine, das ein Ventilgehäuse umfasst, das einen ersten Arbeitsanschluss und einen zweiten Arbeitsanschluss sowie einen Versorgungsanschluss aufweist, der mit einem hydraulischen Druck des Hydraulikfluids beaufschlagbar ist, wodurch ein in dem Ventilgehäuse angeordneter beweglicher Kolben gegen die Kraft einer vorgespannten Feder verschiebbar ist. Dabei ist der Kolben wahlweise in einer ersten Schaltstellung und in einer zweiten Schaltstellung arretierbar. Weiter weist eine in dem Ventilgehäuse angeordnete axiale Welle eine Schaltkulisse auf, wodurch der Kolben über ein in der Schaltkulisse geführtes Steuerelement von der ersten Schaltstellung in die zweite Schaltstellung und von der zweiten Schaltstellung in die erste Schaltstellung führbar ist. Das Hydraulikventil kann in einer solchen Anordnung einen in dem Pleuel angeordneten Stellkolben für eine variable Verdichtung einer Brennkraftmaschine betätigen, und so auf Grund der bistabilen Ausführung des Hydraulikventils mit zwei Schaltstellungen eine sichere Ansteuerung der Stellkolben des Pleuels erreichen. Dadurch wird insgesamt ein sicherer Betrieb der Funktion der variablen Verdichtung der Brennkraftmaschine gewährleistet, da das Risiko, dass bei einer Anordnung von mehreren Hydraulikventilen es zu einer Fehlschaltung eines Hydraulikventils kommen kann, reduziert wird. Alle Hydraulikventile lassen sich bei einer Fehlschaltung in eine Grundposition zurückführen.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Stufenschnitt eines Hydraulikventils nach einem Ausführungsbeispiel der Erfindung;
- Fig. 2: eine Draufsicht auf eine Schaltkulisse nach einem Ausführungsbeispiel der Erfindung;
- Fig. 3: eine isometrische Ansicht der Schaltkulisse nach einem Ausführungsbeispiel der Erfindung;
- Fig. 4: eine weitere isometrische Ansicht der Schaltkulisse nach einem Ausführungsbeispiel der Erfindung;
- Fig. 5: eine weitere isometrische Ansicht der Schaltkulisse nach einem Ausführungsbeispiel der Erfindung;
- Fig. 6: einen Querschnitt des Hydraulikventils nach einem Ausführungsbeispiel der Erfindung in einem ersten Schaltzustand;
- Fig. 7: einen Querschnitt des Hydraulikventils nach einem Ausführungsbeispiel der Erfindung in einem zweiten Schaltzustand; und
- Fig. 8: einen Querschnitt durch einen Pleuel mit einem Hydraulikventil nach einem Ausführungsbeispiel der Erfindung.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

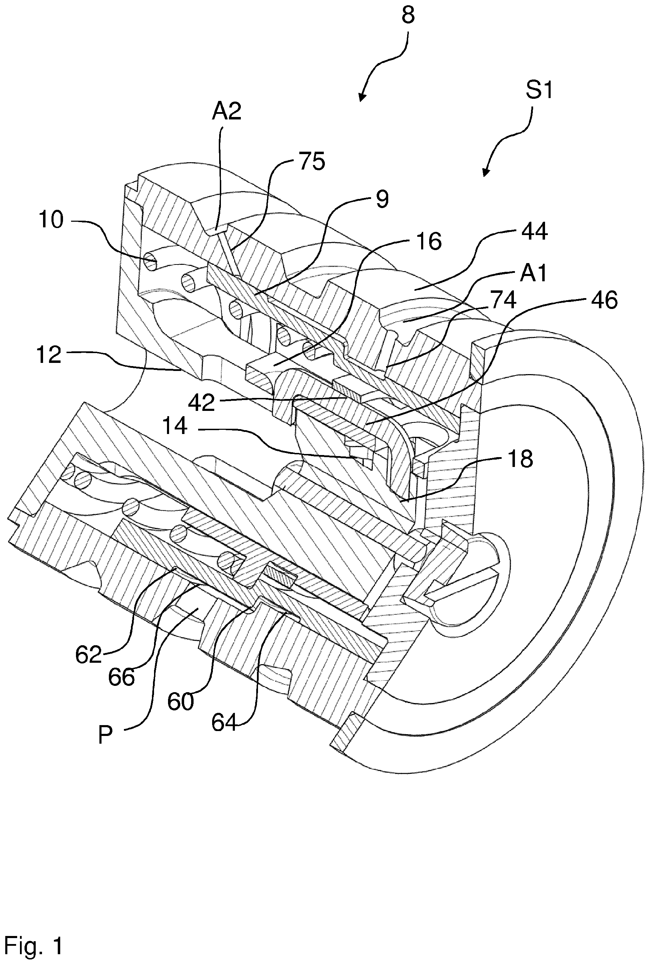

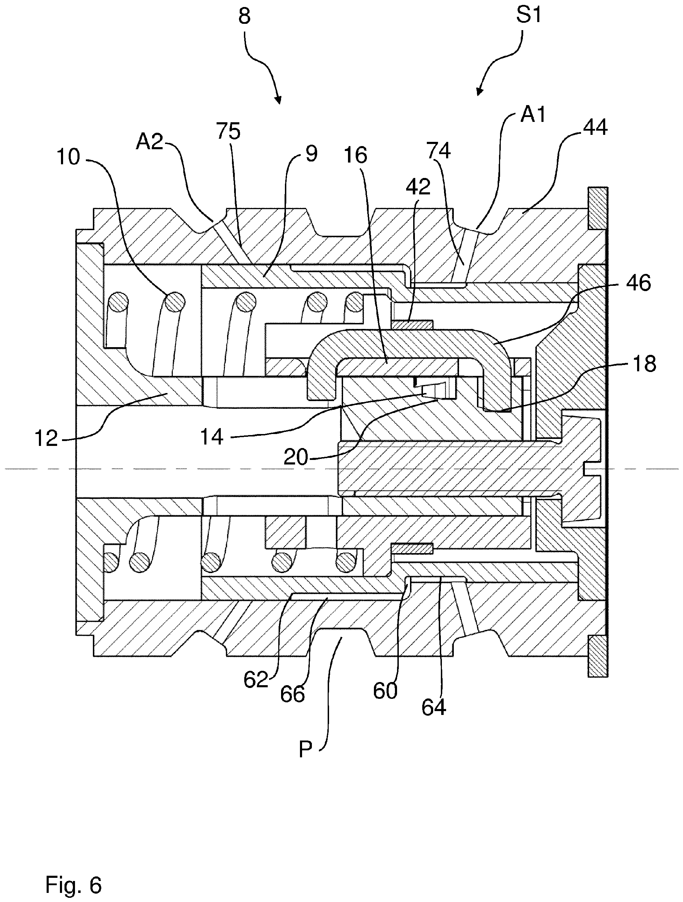

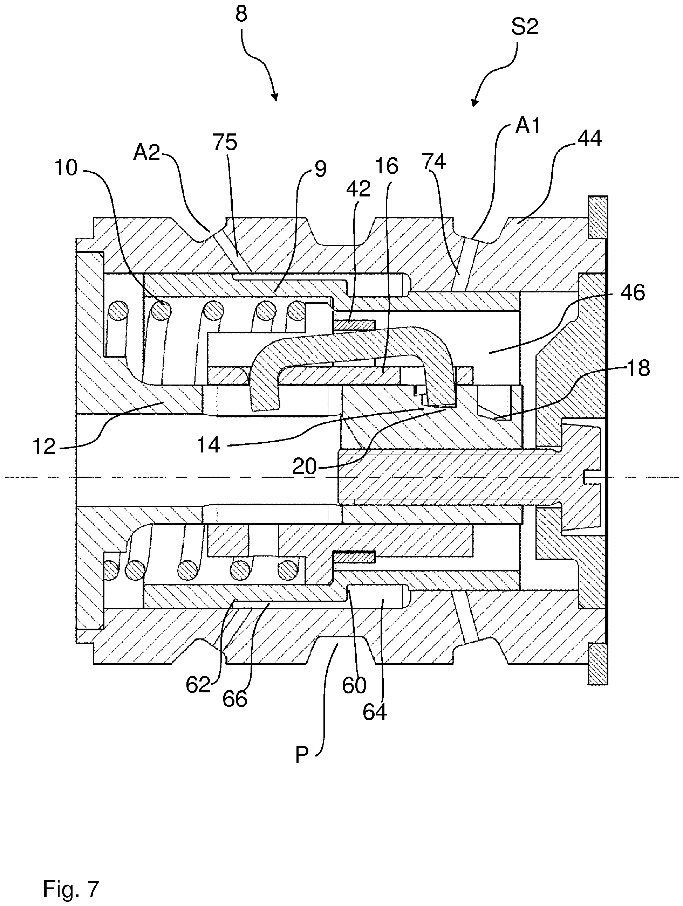

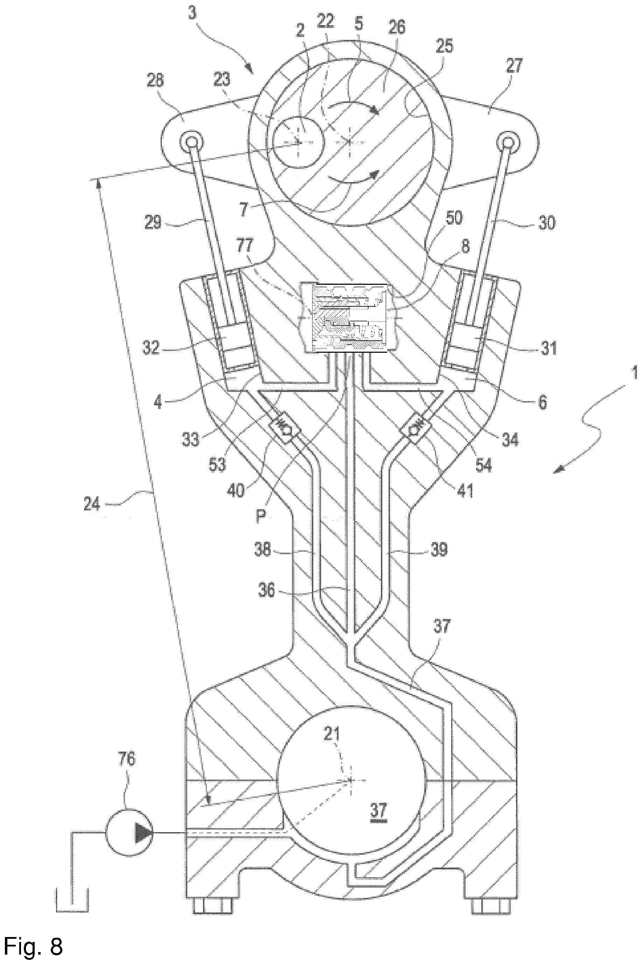

Figur 1 zeigt einen Stufenschnitt eines Hydraulikventils 8 nach einem Ausführungsbeispiel der Erfindung. Das Hydraulikventil 8 mit einem Hydraulikfluid, insbesondere zum Schalten eines Stellkolbens 31, 32 in einem Pleuel 1 für eine variable Verdichtung einer Brennkraftmaschine (in Figur 8 dargestellt), umfasst ein Ventilgehäuse 44, das einen ersten Arbeitsanschluss A1 und einen zweiten Arbeitsanschluss A2 sowie einen Versorgungsanschluss P aufweist, der mit einem hydraulischen Druck des Hydraulikfluids beaufschlagt ist. Dadurch ist ein in dem Ventilgehäuse 44 angeordneter beweglicher Kolben 9, welcher als Stufenkolben ausgebildet ist, gegen die Kraft einer vorgespannten Feder 10 verschiebbar. Die Feder 10, welche sich an einem Ende an einer Welle 12 abstützt, die mit dem Ventilgehäuse 44 verschraubt ist, stützt sich am anderen Ende an einem Steuerelement 16 ab, das wiederum mit dem Kolben 9 wirkverbunden ist. Der Kolben 9 ist wahlweise in einer ersten Schaltstellung S1 und in einer zweiten Schaltstellung S2 arretierbar, wobei die in dem Ventilgehäuse 44 angeordnete axiale Welle 12 eine Schaltkulisse 14 aufweist und der Kolben 9 über ein in der Schaltkulisse 14 geführtes Steuerelement 16 von der ersten Schaltstellung S1 in die zweite Schaltstellung S2 und von der zweiten Schaltstellung S2 in die erste Schaltstellung S1 führbar ist. Die Schaltstellungen S1 und S2 sind in den Querschnitten in den Figuren 6, bzw. 7 genauer dargestellt. Die erste Schaltstellung S1 und die zweite Schaltstellung S2 sind jeweils als in einem Druckbereich stabile Lagen des Hydraulikventils ausgebildet. In der ersten Schaltstellung S1 ist der erste Arbeitsanschluss A1 zu dem Versorgungsanschluss P geöffnet und der zweite Arbeitsanschluss A2 zu dem Versorgungsanschluss P geschlossen und in der zweiten Schaltstellung S2 ist der zweite Arbeitsanschluss A2 zu dem Versorgungsanschluss P geöffnet und der erste Arbeitsanschluss A1 zu dem Versorgungsanschluss P geschlossen. Alternativ ist es denkbar, die beiden Arbeitsanschlüsse A1, A2 mit einem Tankanschluss oder einem Kurbelgehäuse zu verbinden und je nach Schaltstellung zum Tankanschluss bzw. zum Kurbelgehäuse zu öffnen bzw. zu schließen.

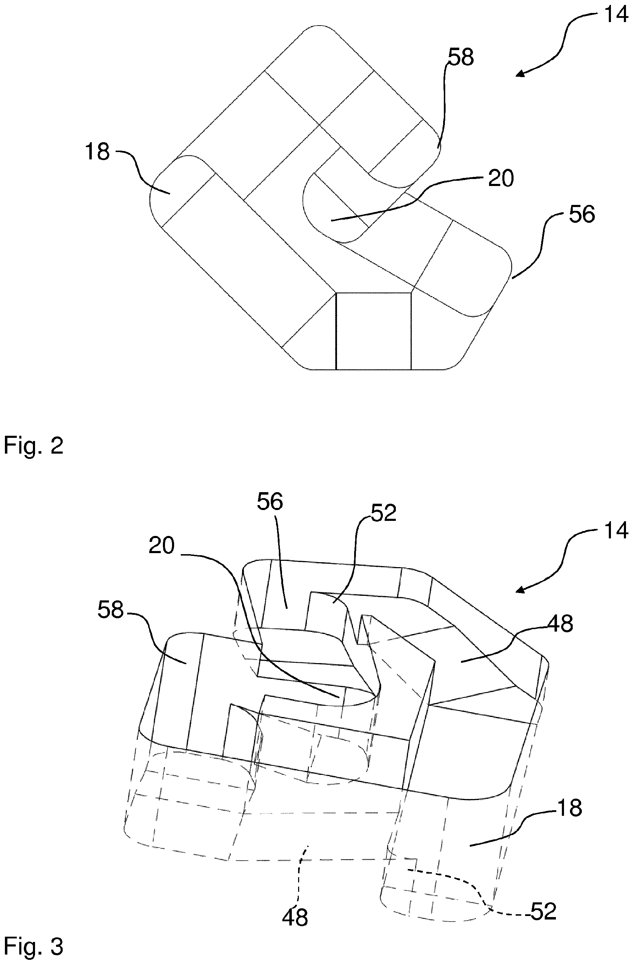

Der Kolben 9 ist in der ersten Schaltstellung S1 in einer ersten Rastposition 18 der Schaltkulisse 14 und in der zweiten Schaltstellung S2 in einer zweiten Rastposition 20 (in Figur 2 dargestellt) verrastbar. Das Steuerelement 16 ist mittels eines über eine Blattfeder 42 elastisch gehaltenen Führungsstifts 46 in der Schaltkulisse 14 führbar.

Der Kolben 9 ist durch einen Druckanstieg des Hydraulikfluids aus einer der beiden Schaltstellungen S1, S2 lösbar, sowie über eine Druckrampe des Hydraulikfluids in die erste Schaltstellung S1 rückführbar.

Der Kolben 9 kann über den Versorgungsanschluss P mit Hydraulikdruck beaufschlagt werden, sodass über eine erste Ringnut 64 eine erste Kolbenfläche 60 und über eine zweite Ringnut 66 eine zweite Kolbenfläche 62 des Kolbens 9 mit Hydraulikdruck beaufschlagt wird. Bei ansteigendem Druck kann so der Kolben 9 gegen die Feder 10 verschoben werden. In der gezeigten Schaltstellung S1 ist der Arbeitsanschluss A1 über die erste Bohrung 74, die erste Ringnut 64 des Kolbens 9, die erste Kolbenfläche 60 und die zweite Ringnut 66 zu dem Versorgungsanschluss P geöffnet. So kann das Hydraulikfluid über den Arbeitsanschluss A1 einen Stellkolben 32 eines Pleuels schalten. Der Kolben 9 ist in der Schaltstellung S1 über das Steuerelement 16 und den Führungsstift 46 in der ersten Raststellung 18 verrastet.

In einer zweiten Schaltstellung S2 wird der Kolben 9 über das Hydraulikfluid aus dem Versorgungsanschluss P durch den Hydraulikdruck auf die erste und zweite Kolbenfläche 60, 62 gegen die Feder 10 gedrückt. Die Feder 10 wird dadurch zusammengeschoben und der Kolben 9 bewegt sich axial in Richtung der Feder 10. Bei Erreichen der zweiten Bohrung 75 mit der zweiten Kolbenfläche 62 ist der Arbeitsanschluss A2 über die zweite Bohrung 75, sowie die zweite Ringnut 66 zu dem Versorgungsanschluss P geöffnet.

Figur 2 zeigt eine Draufsicht auf eine Schaltkulisse 14 nach einem Ausführungsbeispiel der Erfindung. Die Schaltkulisse 14 ist als Vertiefung in der Welle 12 angeordnet und stellt als Laufbahn den möglichen Führungsweg für den Führungsstift 46 des Steuerelements 16 dar. Die Schaltkulisse 14 weist eine erste Rastposition 18 als Grundposition und erster Schaltstellung S1 des Kolbens 9 auf. Von dort kann sich der Führungsstift 46 mit steigendem Hydraulikdruck zu einem ersten Anschlag 56 bewegen und kann bei wieder abfallendem Hydraulikdruck in die zweite Rastposition 20 als zweite Schaltstellung S2 des Kolbens 9 einrasten. Aus dieser zweiten Rastposition 20 kann mit steigendem Hydraulikdruck der Führungsstift 46 wieder gelöst werden und sich bis zu dem zweiten Anschlag 58 bewegen. Zurück zu dem ersten Anschlag 56 kann der Führungsstift 46 nicht mehr, da er dazu einen Absatz 52 überwinden müsste. Bei wieder fallendem Hydraulikdruck kann der Führungsstift 46 aus dem zweiten Anschlag 58 wieder zurück zur ersten Rastposition 18 bewegen und dort verrasten.

Figur 3 zeigt dazu eine isometrische Ansicht der Schaltkulisse 14 nach einem Ausführungsbeispiel der Erfindung. Die Schaltkulisse 14 weist mehrere Führungsrampen 48 mit einem Absatz 52 auf, sodass das Steuerelement 16 nur in einer vorgegebenen Richtung bewegbar ist. Die Führungsrampen 48 sind jeweils wenigstens zwischen der ersten und der zweiten Rastposition 18, 20 angeordnet und weisen am Ende vor einem Anschlag 56, 58 und einer Rastposition 18, 20 einen Absatz 52 auf, sodass der Führungsstift 46 sich nur in einer Richtung vorwärts und nicht rückwärts bewegen kann. Das Steuerelement 16 wird so gezwungen, sich von der ersten Rastposition 18 über einen ersten Anschlag 56 der Schaltkulisse 14 zu der zweiten Rastposition 20 und über eine zweiten Anschlag 58 der Schaltkulisse 14 zurück zu der ersten Rastposition 18 zu bewegen.

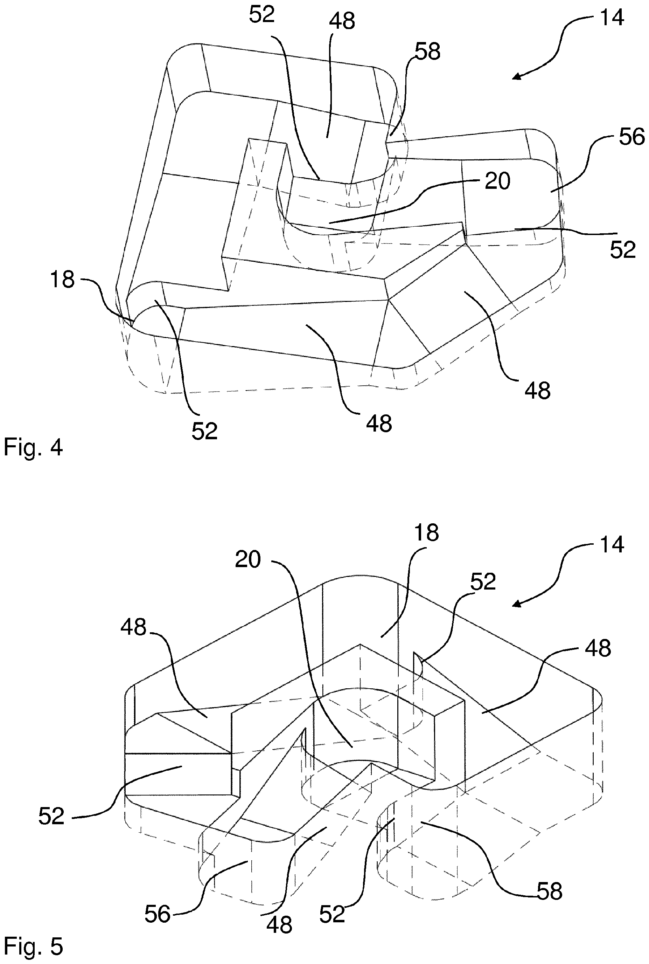

In den Figuren 4 und 5 sind weitere isometrische Ansichten der Schaltkulisse 14 nach einem Ausführungsbeispiel der Erfindung zur weiteren Verdeutlichung der Anordnung der Anschläge 56, 58, der Rastpositionen 18, 20 sowie der Führungsrampen 48 und Absätze 52 dargestellt. Eine Führungsrampe 48 ist jeweils zwischen der ersten Rastposition 18 und dem ersten Anschlag 56, zwischen dem ersten Anschlag 56 und der zweiten Rastposition 20, zwischen der zweiten Rastposition 20 und dem zweiten Anschlag 58, sowie zwischen dem zweiten Anschlag 58 und der ersten Rastposition 18 angeordnet. Die Führungsrampen 48 enden jeweils mit einem Absatz 52, sodass dadurch die Laufbahn der Schaltkulisse 14 als eine Art Sägezahn ausgebildet ist.

Figur 6 zeigt einen Querschnitt des Hydraulikventils 8 nach einem Ausführungsbeispiel der Erfindung in einem ersten Schaltzustand S1. In der gezeigten Schaltstellung S1 ist der Arbeitsanschluss A1 über die erste Bohrung 74, die erste Ringnut 64 des Kolbens 9, die erste Kolbenfläche 60 und die zweite Ringnut 66 zu dem Versorgungsanschluss P geöffnet. So kann das Hydraulikfluid über den Arbeitsanschluss A1 einen Stellkolben 32 eines Pleuels 1 schalten. Der Kolben 9 ist in der Schaltstellung S1 über das Steuerelement 16 und den Führungsstift 46 in der ersten Raststellung 18 verrastet. Der Kolben 9 kann über den Versorgungsanschluss P, der als Ringnut im Ventilgehäuse 44 ausgebildet ist, mit Hydraulikdruck beaufschlagt werden, sodass über eine erste Ringnut 64 eine erste Kolbenfläche 60 sowie über eine zweite Ringnut 66 eine zweite Kolbenfläche 62 des Kolbens 9 mit Hydraulikdruck beaufschlagt wird. Bei ansteigendem Druck kann so der Kolben 9 gegen die Feder 10 verschoben werden und in eine zweite Schaltstellung S2 überführt werden.

Figur 7 zeigt dazu einen Querschnitt des Hydraulikventils 8 nach einem Ausführungsbeispiel der Erfindung in dem zweiten Schaltzustand S2. In der zweiten Schaltstellung S2 wird der Kolben 9 über den Versorgungsanschluss P mit Hydraulikdruck beaufschlagt, sodass der Kolben 9 durch den Hydraulikdruck auf die erste und zweite Kolbenfläche 60, 62 in Wirkverbindung mit dem Steuerelement 16 gegen die Feder 10 gedrückt wird. Die Feder 10 wird dadurch zusammengeschoben und der Kolben 9 bewegt sich axial in Richtung der Feder 10. Bei Erreichen der zweiten Bohrung 75 mit der zweiten Kolbenfläche 62 ist der Arbeitsanschluss A2 über die zweite Bohrung 75, sowie die zweite Ringnut 66 zu dem Versorgungsanschluss P geöffnet. So kann das Hydraulikfluid über den Arbeitsanschluss A2 einen Stellkolben 31 eines Pleuels 1 schalten. Der Kolben 9 ist in der Schaltstellung S2 über das Steuerelement 16 und den Führungsstift 46 in der zweiten Raststellung 20 verrastet.

In Figur 8 ist ein Querschnitt durch einen Pleuel 1 mit einem Hydraulikventil 8 nach einem Ausführungsbeispiel der Erfindung dargestellt. Der Pleuel 1 weist das Hydraulikventil 8 mit dem Hydraulikfluid auf, insbesondere zum Schalten eines Stellkolbens 31, 32 in dem Pleuel 1 für eine variable Verdichtung einer Brennkraftmaschine. Das Hydraulikventil 8 umfasst ein Ventilgehäuse 44, das einen ersten Arbeitsanschluss A1 und einen zweiten Arbeitsanschluss A2 sowie einen Versorgungsanschluss P aufweist, der mit einem hydraulischen Druck des Hydraulikfluids beaufschlagt ist, wodurch ein in dem Ventilgehäuse 16 angeordneter beweglicher Kolben 9 gegen die Kraft einer vorgespannten Feder 10 verschoben wird. Der Kolben 9 ist wahlweise in einer ersten Schaltstellung S1 und in einer zweiten Schaltstellung S2 arretierbar. Eine in dem Ventilgehäuse 44 angeordnete axiale Welle 12 weist eine Schaltkulisse 14 auf, wodurch der Kolben 9 über ein in der Schaltkulisse 14 geführtes Steuerelement 16 von der ersten Schaltstellung S1 in die zweite Schaltstellung S2 und von der zweiten Schaltstellung S2 in die erste Schaltstellung S1 führbar ist.

Das Pleuel 1 in Figur 8 weist ein oberes Kolbenbolzenlagerauge 2 auf, in dem ein nicht näher dargestellter Kolbenbolzen eingesteckt ist. Dieser Kolbenbolzen ist in üblicher Weise fest in einen Brennraumkolben des Verbrennungsmotors eingesteckt. Das Kolbenbolzenlagerauge 2 ist mittels eines Exzenters 3 um eine Schwenkachse 22 schwenkbar, die parallel versetzt zur Längsachse 23 des Kolbenbolzenlagerauges 2 liegt. Somit ist es möglich, das Kolbenbolzenlagerauge 2 in seinem Abstand 24 zu einer Pleuellagerachse 21 eines Pleuellagers 35 zu verändern. Damit kann eine variable Verdichtung des Brennraums verwirklicht werden.

Der Exzenter 3 umfasst einen schwenkbar in einer Bohrung 25 des Pleuels 1 angeordneten Zapfen 26. Von diesem Zapfen 26 erstrecken sich zwei Arme 27, 28 diametral zueinander von dem Zapfen 26 hinfort An den Enden dieser beiden Arme 27, 28 greifen Stützstangen 29, 30. Diese Stützstangen 29, 30 sind gelenkig mit zwei kleinen Linearkolben 31, 32 verbunden. Somit ist es möglich, den Zapfen 26 innerhalb der Bohrung 25 des Pleuels 1 zu schwenken. Dabei fährt der eine kleine Linearkolben 31 bzw. 32 aus einer zylinderförmigen Bohrung 34 bzw. 33 innerhalb des Pleuels 1 aus, während der andere Linearkolben 32 bzw. 31 in eine zylinderförmige Bohrung 33 bzw. 34 des Pleuels 1 einfährt. Fährt der in der Zeichnung linke Linearkolben 32 ein, so wird der Zapfen 26 in der Drehrichtung 7 entgegen dem Uhrzeigersinn geschwenkt. Fährt hingegen der in der Zeichnung rechte Linearkolben 31 ein, so wird der Zapfen 26 in Drehrichtung 5 entsprechend dem Uhrzeigersinn geschwenkt. Die Drehung in Richtung des Uhrzeigersinns bewirkt eine Verlagerung des Kolbenbolzenlagerauges 2 weiter nach oben bzw. weiter von der Pleuellagerachse 21 hinfort. Damit wird der Abstand 24 vergrößert und somit wird die Verdichtung im Brennraum erhöht. Bei maximal eingefahrenem rechten Linearkolben 31 befindet ist der Brennraum auf die Stufe der maximalen Verdichtung eingestellt. Analog bewirkt ein Verschwenken des Zapfens 26 entgegen dem Uhrzeigersinn - d.h. in Drehrichtung 7 - eine Verringerung der Verdichtung bis hin zur Stufe der minimalen Verdichtung.

Um diese beiden Stufen der Verdichtung zu steuern ist ein Hydraulikventil 8 mit einer Ventillängsachse 77 vorgesehen. Das Hydraulikventil 8 ist in einer Bohrung 50 im Pleuel 1 eingesetzt. Mit diesem Hydraulikventil 8 kann unter Druck stehendes Hydraulikfluid, beispielsweise Öl einer Brennkraftmaschine, aus einer Verdrängerkammer 4 bzw. 6 zu einem Versorgungsanschluss P des Hydraulikventils 8 geführt werden. Vom Versorgungsanschluss P wird das Hydraulikfluid über einen Kanal 36, 37 zum Pleuellager 35 geführt, wo es in eine nicht näher dargestellte Ölversorgung eines Exzenterzapfens der Kurbelwelle eingeführt wird. Dieser Exzenterzapfen ist in üblicher Weise drehbar innerhalb des Pleuellagers 35 angeordnet. Beispielsweise bei einem 4-ZylinderMotor sind vier solcher Exzenterzapfen an der Kurbelwelle angeordnet. Demzufolge sind bei einem solchen 4-Zylinder-Motor auch vier Pleuel 1 mit insgesamt vier Pleuellagern 35 vorgesehen.

Die Ölversorgung innerhalb des Pleuellagers 35 kommt von der Ölpumpe 76 des Verbrennungsmotors und versorgt über Zufuhrleitungen 38, 39 die beiden Verdrängerkammern 4, 6. Dabei ist in die beiden Zufuhrleitungen 38, 39 jeweils ein Rückschlagventil 40 bzw. 41 eingesetzt, welches in Flussrichtung von der jeweiligen Verdrängerkammer 4 bzw. 6 zu der Ölversorgung schließt und in die entgegengesetzte Flussrichtung öffnet.

Die vom Brennraumkolben über das Kolbenbolzenlagerauge 2 auf die Stützstangen 29, 30 übertragenen Kräfte sind sehr hoch. Diese hohen Kräfte sind um ein weites größer als die Kräfte, die am Linearkolben 31 bzw. 32 infolge des Druckes der Ölpumpe 76 wirken. Damit kann das Hydraulikventil 8 je nach Stellung Druck aus der einen Verdrängerkammer 6 oder der anderen Verdrängerkammer 4 zur Ölversorgung zurück drücken. Wird die eine Verdrängerkammer 6 bzw. 4 infolge der hohen Kräfte des Brennraumkolbens verkleinert, so saugt die andere Verdrängerkammer 4 bzw. 6 über deren sich dann öffnendes Rückschlagventil 40 bzw. 41 Öl von der Ölversorgung ein. Auf dem Weg von der Ölpumpe 76 zur Ölversorgung innerhalb der Kurbelwelle sind weitere Verbraucher angeschlossen, die Öl abzweigen. Insbesondere geschmierte Lager senken den Öldruck ab. Die Viskosität des Öls spielt auch eine Rolle für den Öldruck.

## Patentansprüche

1. Hydraulikventil (8) mit einem Hydraulikfluid, insbesondere zum Schalten eines Stellkolbens (31, 32) in einem Pleuel (1) für eine variable Verdichtung einer Brennkraftmaschine, umfassend ein Ventilgehäuse (44), das einen ersten Arbeitsanschluss (A1) und einen zweiten Arbeitsanschluss (A2) sowie einen Versorgungsanschluss (P) aufweist, der mit einem hydraulischen Druck des Hydraulikfluids beaufschlagbar ist, wodurch ein in dem Ventilgehäuse (44) angeordneter beweglicher Kolben (9) gegen die Kraft einer vorgespannten Feder (10) verschiebbar ist,
wobei der Kolben (9) wahlweise in einer ersten Schaltstellung (S1) und in einer zweiten Schaltstellung (S2) arretierbar ist, wobei eine in dem Ventilgehäuse (44) angeordnete axiale Welle (12) eine Schaltkulisse (14) aufweist und der Kolben (9) über ein in der Schaltkulisse (14) geführtes Steuerelement (16) von der ersten Schaltstellung (S1) in die zweite Schaltstellung (S2) und von der zweiten Schaltstellung (S2) in die erste Schaltstellung (S1) führbar ist, **dadurch gekennzeichnet, dass** das Steuerelement (16) mittels eines elastisch gehaltenen Führungsstifts (46) in der Schaltkulisse (14) führbar ist und die Schaltkulisse (14) wenigstens eine Führungsrampe (48) mit einem Absatz (52) aufweist, sodass das Steuerelement (16) nur in einer vorgegebenen Richtung bewegbar ist, wobei das mit dem Kolben (9) in Wirkverbindung angeordnete Steuerelement (16) an der vorgespannten Feder (10) abgestützt und gegen die Feder (10) verschiebbar ist.

2. Hydraulikventil nach Anspruch 1, wobei die erste Schaltstellung (S1) und die zweite Schaltstellung (S2) jeweils als in einem Druckbereich stabile Lagen des Kolbens (9) ausgebildet sind.

3. Hydraulikventil nach Anspruch 1 oder 2, wobei in der ersten Schaltstellung (S1) der erste Arbeitsanschluss (A1) zu dem Versorgungsanschluss (P) geöffnet ist und der zweite Arbeitsanschluss (A2) zu dem Versorgungsanschluss (P) geschlossen ist und wobei in der zweiten Schaltstellung (S2) der zweite Arbeitsanschluss (A2) zu dem Versorgungsanschluss (P) geöffnet ist und der erste Arbeitsanschluss (A1) zu dem Versorgungsanschluss (P) geschlossen ist.

4. Hydraulikventil nach Anspruch 1 oder 2, wobei in der ersten Schaltstellung (S1) der erste Arbeitsanschluss (A1) zu einem Tankanschluss bzw. einem Kurbelgehäuse geöffnet ist und der zweite Arbeitsanschluss (A2) zu dem Tankanschluss bzw. dem Kurbelgehäuse geschlossen ist und wobei in der zweiten Schaltstellung (S2) der zweite Arbeitsanschluss (A2) zu dem Tankanschluss bzw. dem Kurbelgehäuse geöffnet ist und der erste Arbeitsanschluss (A1) zu dem Tankanschluss bzw. dem Kurbelgehäuse geschlossen ist.

5. Hydraulikventil nach einem der vorhergehenden Ansprüche, wobei der Kolben (9) in der ersten Schaltstellung (S1) in einer ersten Rastposition (18) der Schaltkulisse (14) und in der zweiten Schaltstellung (S2) in einer zweiten Rastposition (20) verrastbar ist.

6. Hydraulikventil nach einem der vorhergehenden Ansprüche, wobei das Steuerelement (16) von der ersten Rastposition (18) über einen ersten Anschlag (56) der Schaltkulisse (14) zu der zweiten Rastposition (20) und über eine zweiten Anschlag (58) der Schaltkulisse (14) zurück zu der ersten Rastposition (18) führbar ist.

7. Hydraulikventil nach einem der vorhergehenden Ansprüche, wobei der Kolben (9) durch einen Druckanstieg des Hydraulikfluids aus einer der beiden Schaltstellungen (S1, S2) lösbar ist.

8. Hydraulikventil nach einem der vorhergehenden Ansprüche, wobei der Kolben (9) über eine Druckrampe des Hydraulikfluids in die erste Schaltstellung (S1) rückführbar ist.

9. Pleuel (1) mit einem Hydraulikventil (8) mit einem Hydraulikfluid, insbesondere zum Schalten eines Stellkolbens (31, 32) in dem Pleuel (1) für eine variable Verdichtung einer Brennkraftmaschine, umfassend ein Ventilgehäuse (44), das einen ersten Arbeitsanschluss (A1) und einen zweiten Arbeitsanschluss (A2) sowie einen Versorgungsanschluss (P) aufweist, der mit einem hydraulischen Druck des Hydraulikfluids beaufschlagbar ist, wodurch ein in dem Ventilgehäuse (44) angeordneter beweglicher Kolben (9) gegen die Kraft einer vorgespannten Feder (10) verschiebbar ist,
wobei der Kolben (9) wahlweise in einer ersten Schaltstellung (S1) und in einer zweiten Schaltstellung (S2) arretierbar ist, wobei eine in dem Ventilgehäuse (44) angeordnete axiale Welle (12) eine Schaltkulisse (14) aufweist und der Kolben (9) über ein in der Schaltkulisse (14) geführtes Steuerelement (16) von der ersten Schaltstellung (S1) in die zweite Schaltstellung (S2) und von der zweiten Schaltstellung (S2) in die erste Schaltstellung (S1) führbar ist, **dadurch gekennzeichnet, dass** das Steuerelement (16) mittels eines elastisch gehaltenen Führungsstifts (46) in der Schaltkulisse (14) führbar ist und die Schaltkulisse (14) wenigstens eine Führungsrampe (48) mit einem Absatz (52) aufweist, sodass das Steuerelement (16) nur in einer vorgegebenen Richtung bewegbar ist, wobei das mit dem Kolben (9) in Wirkverbindung angeordnete Steuerelement (16) an der vorgespannten Feder (10) abgestützt und gegen die Feder (10) verschiebbar ist.

## Claims

1. Hydraulic valve (8) with a hydraulic fluid, in particular for switching an actuating piston (31, 32) in a connecting rod (1) for a variable compression of an internal combustion engine, comprising a valve housing (44), which has a first working port (A1) and a second working port (A2) and a feed port (P) which can be charged with a hydraulic pressure of the hydraulic fluid, whereby a piston (9) which is movable in the valve housing (44) is displaceable counter to the force of a prestressed spring (10),
wherein the piston (9) is selectively arrestable in a first switching setting (S1) and in a second switching setting (S2), wherein an axial shaft (12) arranged in the valve housing (44) has a switching motion link (14), and the piston (9) can be guided, by means of a control element (16) guided in the switching motion link (14), from the first switching setting (S1) into the second switching setting (S2) and from the second switching setting (S2) into the first switching setting (S1), **characterized in that** the control element (16) can be guided by means of an elastically held guide pin (46) in the switching motion link (14), and the switching motion link (14) has at least one guide ramp (48) with a shoulder (52), such that the control element (16) is movable only in a predefined direction, wherein the control element (16), which is arranged so as to be operatively connected to the piston (9), is supported on the prestressed spring (10) and is displaceable counter to the spring (10).

2. Hydraulic valve according to Claim 1, wherein the first switching setting (S1) and the second switching setting (S2) are each formed as positions of the piston (9) which are stable in a pressure range.

3. Hydraulic valve according to Claim 1 or 2, wherein, in the first switching setting (S1), the first working port (A1) is open to the feed port (P), and the second working port (A2) is closed to the feed port (P), and wherein, in the second switching setting (S2), the second working port (A2) is open to the feed port (P) and the first working port (A1) is closed to the feed port (P).

4. Hydraulic valve according to Claim 1 or 2, wherein, in the first switching setting (S1), the first working port (A1) is open to a tank port or a crankcase and the second working port (A2) is closed to the tank port or the crankcase, and wherein, in the second switching setting (S2), the second working port (A2) is open to the tank port or to the crankcase and the first working port (A1) is closed to the tank port or to the crankcase.

5. Hydraulic valve according to one of the preceding claims, wherein the piston (9) is lockable in the first switching setting (S1) in a first detent position (18) of the switching motion link (14) and in the second switching setting (S2) in a second detent position (20).

6. Hydraulic valve according to one of the preceding claims, wherein the control element (16) can be guided from the first detent position (18) over a first stop (56) of the switching motion link (14) to the second detent position (20) and over a second stop (58) of the switching motion link (14) back to the first detent position (18).

7. Hydraulic valve according to one of the preceding claims, wherein the piston (9) can be released from one of the two switching settings (S1, S2) by means of an increase in pressure of the hydraulic fluid.

8. Hydraulic valve according to one of the preceding claims, wherein the piston (9) can be returned into the first switching settings (S1) by means of a pressure ramp of the hydraulic fluid.

9. Connecting rod (1) having a hydraulic valve (8) with a hydraulic fluid, in particular for switching an actuating piston (31, 32) in the connecting rod (1) for a variable compression of an internal combustion engine, comprising a valve housing (44), which has a first working port (A1) and a second working port (A2) and a feed port (P) which can be charged with a hydraulic pressure of the hydraulic fluid, whereby a piston (9) which is movable in the valve housing (44) is displaceable counter to the force of a prestressed spring (10), wherein the piston (9) is selectively arrestable in a first switching setting (S1) and in a second switching setting (S2), wherein an axial shaft (12) arranged in the valve housing (44) has a switching motion link (14), and the piston (9) can be guided, by means of a control element (16) guided in the switching motion link (14), from the first switching setting (S1) into the second switching setting (S2) and from the second switching setting (S2) into the first switching setting (S1), **characterized in that** the control element (16) can be guided by means of an elastically held guide pin (46) in the switching motion link (14), and the switching motion link (14) has at least one guide ramp (48) with a shoulder (52), such that the control element (16) is movable only in a predefined direction, wherein the control element (16), which is arranged so as to be operatively connected to the piston (9), is supported on the prestressed spring (10) and is displaceable counter to the spring (10).

## Revendications

1. Soupape hydraulique (8) avec un fluide hydraulique, en particulier pour commuter un piston de commande (31, 32) dans une bielle (1) en vue d'une compression variable d'un moteur à combustion interne, comprenant un boîtier de soupape (44), qui présente un premier raccord de travail (A1) et un second raccord de travail (A2) ainsi qu'un raccord d'alimentation (P), qui peut être soumis à une pression hydraulique du fluide hydraulique, un piston mobile (9) disposé dans le boîtier de soupape (44) pouvant ainsi être déplacé contre la force d'un ressort précontraint (10),
dans laquelle le piston (9) peut être arrêté au choix dans une première position de commutation (S1) et dans une seconde position de commutation (S2), dans laquelle un arbre axial (12) disposé dans le boîtier de soupape (44) présente une coulisse de commutation (14) et le piston (9) peut être conduit de la première position de commutation (S1) à la seconde position de commutation (S2) et de la seconde position de commutation (S2) à la première position de commutation (S1) au moyen d'un élément de commande (16) guidé dans la coulisse de commutation (14),
**caractérisée en ce que** l'élément de commande (16) peut être guidé dans la coulisse de commutation (14) au moyen d'une tige de guidage (46) maintenue de façon élastique et la coulisse de commutation (14) présente au moins une rampe de guidage (48) avec un épaulement (52), de telle manière que l'élément de commande (16) ne soit déplaçable que dans une direction prédéterminée, dans laquelle l'élément de commande (16) disposé en liaison active avec le piston (9) s'appuie sur le ressort précontraint (10) et est déplaçable contre le ressort (10).

2. Soupape hydraulique selon la revendication 1, dans laquelle la première position de commutation (S1) et la seconde position de commutation (S2) sont formées chacune comme des positions du piston (9) stables dans un domaine de pression.

3. Soupape hydraulique selon la revendication 1 ou 2, dans laquelle dans la première position de commutation (S1) le premier raccord de travail (A1) est ouvert vers le raccord d'alimentation (P) et le second raccord de travail (A2) est fermé vers le raccord d'alimentation (P) et dans laquelle dans la seconde position de commutation (S2) le second raccord de travail (A2) est ouvert vers le raccord d'alimentation (P) et le premier raccord de travail (A1) est fermé vers le raccord d'alimentation (P).

4. Soupape hydraulique selon la revendication 1 ou 2, dans laquelle dans la première position de commutation (S1) le premier raccord de travail (A1) est fermé vers un raccord de réservoir ou un carter de vilebrequin et le second raccord de travail (A2) est fermé vers le raccord de réservoir ou le carter de vilebrequin et dans laquelle dans la seconde position de commutation (S2) le second raccord de travail (A2) est ouvert vers le raccord de réservoir ou le carter de vilebrequin et le premier raccord de travail (A1) est fermé vers le raccord de réservoir ou le carter de vilebrequin.

5. Soupape hydraulique selon l'une quelconque des revendications précédentes, dans laquelle le piston (9) dans la première position de commutation (S1) peut être calé dans une première position d'encliquetage (18) de la coulisse de commutation (14) et dans la seconde position de commutation (S2) dans une seconde position d'encliquetage (20).

6. Soupape hydraulique selon l'une quelconque des revendications précédentes, dans laquelle l'élément de commande (16) peut être conduit de la première position d'encliquetage (18) par une première butée (56) de la coulisse de commutation (14) jusqu'à la seconde position d'encliquetage (20) et par une seconde butée (56) de la coulisse de commutation (14) en retour jusqu'à la première position d'encliquetage (18).

7. Soupape hydraulique selon l'une quelconque des revendications précédentes, dans laquelle le piston (9) peut être dégagé de l'une des deux positions de commutation (S1, S2) par une augmentation de la pression du fluide hydraulique.

8. Soupape hydraulique selon l'une quelconque des revendications précédentes, dans laquelle le piston (9) peut être ramené dans la première position de commutation (S1) par une baisse de la pression du fluide hydraulique.

9. Bielle (1) avec une soupape hydraulique (8) avec un fluide hydraulique, en particulier pour commuter un piston de commande (31, 32) dans une bielle (1) en vue d'une compression variable d'un moteur à combustion interne, comprenant un boîtier de soupape (44), qui présente un premier raccord de travail (A1) et un second raccord de travail (A2) ainsi qu'un raccord d'alimentation (P), qui peut être soumis à une pression hydraulique du fluide hydraulique, un piston mobile (9) disposé dans le boîtier de soupape (44) pouvant ainsi être déplacé contre la force d'un ressort précontraint (10),
dans laquelle le piston (9) peut être arrêté au choix dans une première position de commutation (S1) et dans une seconde position de commutation (S2), dans laquelle un arbre axial (12) disposé dans le boîtier de soupape (44) présente une coulisse de commutation (14) et le piston (9) peut être conduit de la première position de commutation (S1) à la seconde position de commutation (S2) et de la seconde position de commutation (S2) à la première position de commutation (S1) au moyen d'un élément de commande (16) guidé dans la coulisse de commutation (14),
**caractérisée en ce que** l'élément de commande (16) peut être guidé dans la coulisse de commutation (14) au moyen d'une tige de guidage (46) maintenue de façon élastique et la coulisse de commutation (14) présente au moins une rampe de guidage (48) avec un épaulement (52), de telle manière que l'élément de commande (16) ne soit déplaçable que dans une direction prédéterminée, dans laquelle l'élément de commande (16) disposé en liaison active avec le piston (9) s'appuie sur le ressort précontraint (10) et est déplaçable contre le ressort (10).
